Europäisches Patentamt

European Patent Office

Office européen des brevets

(11) Publication number: **0 414 945 A1**

# EUROPEAN PATENT APPLICATION

(21) Application number: **89116106.9**

(22) Date of filing: **31.08.89**

(51) Int. Cl.5: **A23L 1/238**, A23L 1/27

(43) Date of publication of application:
**06.03.91 Bulletin 91/10**

(84) Designated Contracting States:
**DE ES FR GB IT**

(71) Applicant: **FRONTIER TOCHIGI CO-OPERATIVE**
**5-29, Miyazono-cho**
**Utsunomiya-shi Tochigi-ken(JP)**

(72) Inventor: **Tokita, Hiroshi**
**6-16, Ekiminami-cho 6-chome**
**Oyama-shi Tochigi-ken(JP)**
Inventor: **Matsui, Isamu**
**Imaichi 394-4**
**Imaichi-shi Tochigi-ken(JP)**
Inventor: **Hasegawa, Hiroyuki**
**Nishikawada-cho 1594-83**
**Utsunomiya-shi Tochigi-ken(JP)**
Inventor: **Taima, Susumu**
**Oazamasudashinden 447-46**
**Kasukabe-shi Saitama-ken(JP)**
Inventor: **Ohyoshi, Kensuke**
**Oazaaoyagi 1600**
**Tatebayashi-shi Gunma-ken(JP)**
Inventor: **Sugita, Hisao**
**Oazanatadate 69-2**
**Shimodate-shi Ibaragi-ken(JP)**
Inventor: **Tsuchida, Shigeru**
**Shima 753-7**
**Mouka-shi Tochigi-ken(JP)**

(74) Representative: **Klingseisen, Franz, Dipl.-Ing.**
**et al**
**Dr. F. Zumstein Dipl.-Ing. F. Klingseisen**
**Bräuhausstrasse 4**
**W-8000 München 2(DE)**

(54) **An improved Shoyu (soy sauce).**

(57) Shoyu, an original and traditional Japanese liquid seasoning, has a blackish purple or blackish brown color due to the materials used and the manufacturing process. According to the present invention, however, such color peculiar to the conventional shoyu can be decolored so that the shoyu can be colored in any desired colors such as red, blue, yellow, green, etc., whereby the conventional shoyu can be improved into one which is available in a variety of colors while maintaining the taste, aroma and flavor peculiar to the conventional shoyu.

EP 0 414 945 A1

# AN IMPROVED SHOYU (SOY SAUCE)

Background of the Invention

The present invention relates to an improved shoyu or soy sauce. The shoyu is an original and traditional Japanese liquid seasoning indispensable for the eating habits of the Japanese. The Shoyu has been exported to many countries of the world such as those in the American Continent, Europe, Asia, Oceania, etc. from about several tens years ago. Today, the shoyu is used not only for the traditional Japanese cuisine (cooking) also as a seasoning for a variety of cuisines including frizzled food such as frizzled vegetable or meat and as one of the main materials of the barbecue sauce even in those countries. In the American Continent and Southeast Asia, the shoyu is manufactured in the local factories to meet the expanding local demand.

Normally, the shoyu presents a blackish purple or blackish brown color because of the materials and manufacturing process and thus colors the cuisine darkly when used as a seasoning. Thus, the color of the shoyu sometimes spoils the original colors and features of the materials with which the cuisines are prepared depending on the kinds of the cuisines. For this reason, the shoyu could not be used for some cf the cuisines even when the taste, aroma and flavor of the shoyu were desirable for the cuisines. Thus, the use of the shoyu has been limited. For example, the fresh Japanese radish and turnip cut into slices or into long thin strips are appreciated for their fresh whiteness, but such whiteness will turn into pale brown color to spoil the original whiteness of the radish and turnip when a small amount of shoyu is added. Other examples are the cases of the immature of peas and the immature of kidney beans. These vegetables present an attractive fresh green color when boiled, but such green color turns dull when cooked with the shoyu though the vegetables become more tasty. The same can be said in the case of a carrot appreciated for its fresh red color, as well as in the case of the white meat of fish.

Summary of the Invention

An object of the present invention is to provide a shoyu wherefrom its peculiar color, that is, the blackish purple or blackish brown color is removed.

Another object of the present invention is to provide a shoyu with various colors such as red, blue, yellow, green, etc. which have never been used for the conventional shoyu.

Further object of the present invention is to provide a shoyu with various colors for a wide range of uses which have never been realized before. The shoyu based on the present invention is rid of its peculiar blackish purple color or blackish brown color so that the shoyu can take any desired colors such as red, blue, yellow, green, etc. in order to accomplish above objects.

The shcyu with such unconventional colors can be utilized for a variety of cuisines or new cuisines, making the best use of its colors.

Detailed Description of the Preferred Embodiment

The following process chart illustrates a typical manufacturing process chart of the conventional shoyu.

In the case of the manufacturing process, 1,170 kg of soybean is soaked in water or low-temperature hot water until the weight of the soybeans is nearly doubled by absorbing the water. Then, the soybeans are cooked in a cooker for about two hours, and 1,000 kg of roasted and crushed wheat and 1.23 kg of spores aspergillus are mixed with the soybeans. The mixture is placed in a thermostatic chamber for 8 to 9 hours at a temperature within the range of 26 to 27° C to facilitate the propagation of "koji" mold. As the "koji" mold propagates, the mixture generates heat. The internal temperature and the humidity should be maintained within 26 to 27° C and 92 to 93% respectively, and during such period of time the mixture should be stirred 2 to 3 times. Then, 2,170 kg of "koji" will be obtained after three days. For the spores aspergilus, apergillus oryzae , aspergillus sojae, etc. with a high protein decomposing capacity and high propagation capacity is preferable.Thus obtained"koji"is mixed with the saline water prepared by dissolving 925 kg of salt into 3,550 liters of water, and the mixture is put in a large fermentation tank for maturing. This mixture is called "moromi", which needs to be stirred occasionally so that air is supplied inside to facilitate the steady progress of the fermentation. It takes about one year for the"moromi"to mature completely. The matured"moromi"is pressed to be divided into liquid and solid. The liquid obtained is about 5,620 kg in quantity. The liquid is called the "kiage shoyu" (fresh soy sauce). The "kiage shoyu" is heated at 80°C for pasteurization, and left for a while for the sedimentation of dregs to be removed to obtain the clear liquid, which is called the "koikuchi shoyu" (soy sauce of common type) that is most popularly consumed. The "koikuchi shoyu" is obtained in the quantity of about 5,310 Kg and presents a blackish purple or blackish brown color.

## Manufacturing Process Chart

```
                                              Spores of
                             Soaking          aspergillus
Soy beans — Selection — in water — Cooking —
                                                         — Making of koji

Wheat —— Selection — Roasting — Crushing —

Salt —
                                                         — Koji
Water —

                                                         Moromi

              Pressing ——————— Maturing —

        solid       Kiage shoyu

              Pasteurization ( 60 ~ 80°C )

        Elimination of dregs —— Koikuchi shoyu
```

A "saishikomi shoyu" (soy sauce of refermented type) can be produced using the "kiage shoyu" instead of saline water in making the "moromi" though the rest of the manufacturing process is the same as that for the "koikuchi shoyu." The "saishikomi shoyu" has a little higher viscosity, thicker color and richer components (ingredients), compared with those of the "koichuchi shoyu."

A "Misodama" or miso ball is produced by roughly crushing the steamed soybeans after cooling. Then, the "misodama" is mixed with the "koji" taken from the cultured "koji" mold and some saline water. The mixture is put in a fermentation tank for maturing. The liquid separated naturally from the mixture is collected and heated for pasteurization to produce the "tamari shoyu".

Besides, an "usukuchi shoyu" (soy sauce of light color type) is produced by the "koji" obtained at a lower temperature and the "moromi" obtained by adding a larger quantity of saline water and by reduced stirring than the case of the manufacturing process for the "koikuchi shoyu." The "usukuchi shoyu" is characterized by the lighter color and the larger salt content compared with the "koikuchi shoyu" as shown in the following table.

The common components of various types of shoyu are as shown in the following table:

Table

| Type / Components | | | Koikuchi | Usukuchi | Tamari | Sasikomi |
|---|---|---|---|---|---|---|
| Energy | | kcal | 58 | 48 | 76 | 94 |
| Water | | g | 69.5 | 70.9 | 64.3 | 62.5 |
| Protein | | | 7.5 | 5.7 | 10.0 | 9.4 |
| Lipid | | | 0 | 0 | 0 | 0 |
| Carbo-hydrate | Suger | | 7.1 | 6.3 8.9 | 9.0 | 14.1 |
| | Fiber | | 0 | 0 | 0 | 0 |
| Ash | | | 15.9 | 17.1 | 16.7 | 14.0 |
| Minerals | Calcium | mg | 21 | 18 | 30 | 35 |
| | Phosphorus | | 140 | 110 | 200 | 200 |
| | Iron | | 2.3 | 2.1 | 3.9 | 5.7 |
| | Sodium | | 5900 | 6400 | 5900 | 4900 |
| | Pottasium | | 400 | 330 | 720 | 560 |
| Vitamins | A | IU | 0 | 0 | 0 | 0 |
| | B1 | mg | 0.05 | 0.05 | 0.04 | 0.05 |
| | B2 | | 0.19 | 0.10 | 0.14 | 0.21 |
| | Niacin | | 1.1 | 0.7 | 1.1 | 1.8 |
| | C | | 0 | 0 | 0 | 0 |
| Remarks | | | *1 | *2 | *3 | *4 |

(per 100 g)

Note: *1 Specific gravity 1.18   Salt equivalence 15.0 g
      *2        ditto        1.18        ditto         16.3 g
      *3        ditto        1.21        ditto         15.0 g
      *4        ditto        1.21        ditto         12.4 g

According to the present invention, the "koikuchi shoyu," "kiage shoyu","saishikomi shoyu". "tamari shoyu" and"usukuchi shoyu " can be colored in any desired colors. The coloring procedure will be explained hereafter.

Various types of shoyu are decolored so that they can be colored in any desired colors. For decoloring the shoyu, charcoal, decolorizing resin, synthetic adsorbent, ion-exchange resin, activated clay and other decolorizing agents may be used. The decolorization of the shoyu by decolorizing agants is made in two types of operation:

A batch operation wherein the decolorizing agents are mixed in the shoyu for decolorization and removed by filter after completing the decolorization. The other column operation wherein the decolorizing agents are packed in a column so that the shoyu can be made to pass through the decolorizing agents.

Besides, the ultrafiltration method and the reverse osmosis membrane method, preferably the loose reverse osmosis membrane type method, may also be used for the decolorization of the shoyu.

In the case of the former method, the flavor-constituting components, mainly consisting of the nitrogen compounds such as amino acid, and some other components will be lost to a little extent, but the taste, aroma and flavor peculiar to the shoyu are little affected. In the case of the latter method, the loss of the flavor-constituting components is smaller than the case of the former method, and thus the use of the latter method is preferable. Both of these decolorizing methods produce no ill effects on the shoyu.

The decolorization of the shoyu may be accomplished by appropriate methods other than those described in the above, and more than two methods may be combined for more effective decolorization.

As described in the foregoing, when the decolorization of the shoyu is performed, especially using the decolorizing agent, a part of some components of the shoyu such as nitrogen component will be lost sometimes simultaneously with the progress of the decolorization action. In such a case, the lost components can be supplemented for improving the quality of the shoyu.

The decolorized shoyu can be colored in any desired colors with a natural coloring agent or a synthetic coloring agent. As the natural coloring agents, for examp monascus pigment, safflower yellow pigment, gardenia pigment, annatto pigment, cochineel pigment, beet red pigment, paprika pigment and other pigments can be used for the coloring of the shoyu. Also, the synthetic coloring agents which can be used for the shoyu include the following pigments, for example, Amaranth, Erythrosine, New coccine, Eosine, Phloxine, Rose bengale, Acid red, Tartrazine, Sunset yellow FCF, Light green SF yellowish, Fast green FCF, Brilliant blue FCF, Indigo carmine and the food color aluminum lakes of these pigments.

The above pigments can be used either singly or in combination so that any desired colors such as red, blue, yellow, green, etc. can be obtained for use in producing the improved shoyu according to the present invention.

Thus, the improved shoyu can present new colors different from the color peculiar to the conventional shoyu. The improved shoyu is expected to have the following uses. For example, pouring some red-colored shoyu onto the center of some Japanese radish cut into long thin strips in a small china creates an eye-catching contrast of the whiteness of the radish and the red of the shoyu and makes the radish tasty to provoke our appetite. Also, when the immature of garden peas are boiled with the water containing some green-colored shoyu, the cooked garden peas maintain their original fresh green color even after the shoyu is aborbed into the peas and taste good. Furthermore, when a piece of fish with reddish skin and white meat such as red sea bream is cooked with some red-colored or colorless shoyu, its original reddish skin color is enhanced.

As is obvious from the above examples, the improved shoyu available in various colors can be used selectively depending on the original colors of the materials to be cooked so that the cuisines with desired taste and color can be prepared, and this not only expands the variety of the cuisines but also enables the creation of new cusines. Furthermore, the improved shoyu may be used as one of the table seasonings for dining to make the eating habits of people more diversified and more enjoyable.

The munufacturing processes of the improved shoyu will be described hereafter.

(Example 1)

100 g of active carbon was added to 2,000 ml of commercially available"koikuchi shoyu" (Chromaticity: Standard color: No. 11, Absorbance E: 3.2 at 530 mm, Salt content: 16.5 g/dl, Aggregate of nitrogen: 1.56 g/dl). The mixture was stirred for 30 minutes, and 1,600 ml of filtrate (Chromaticity: No applicable chromaticity since the filterate is colorless, Absorbance E: 0.015 at 530 mm) was obtained by separating the mixture with a centrifuge.

The monuscus pigment : Hokuto Red No. 8026 (Trade name of monuscus pigment made by Hokuto Kasei Co., Ltd.), 0.9%, was added to the filtrate to obtain a red-colored shoyu.

Similarly, a yellow-colored shoyu was obtained by adding 0.5% of the safflower yellow pigment: Hokuto Yellow SL-A (the product of the same manufacturer as above) to the filtrate.

Also, similarly, 0.4% of the enzyme treated gardenia pigment: Hokuto Green No. 8302 (The product of the same manufacturer as above) was added to the filtrate to obtain a green colored shoyu.

Similarly, 0.3% of the enzyme treated gardenia pigment: Gardenia Blue A-T Taito (Trade name of the product of Taito Co., Ltd.) was added to the filtrate to obtain a blue-colored shoyu.

Similarly, 0.5% of the gardenia pigment: TS Grape No. 8U (Trade name of the produtct of Taito Co., Ltd.) was added to the filtrate to obtain a purple-colored shoyu.

All these improved types of shoyu present transparent and bright colors, and no fading was observed.

(Example 2)

1,000 ml of the granular active carbon: Diahope (Trade name of the product of Mitsubushi Chemical Industries Ltd.) packed in a glass column (48 mm in diameter and 700 mm in length) was washed with water and deaerated. Then, the appropriate quantity of the "kiage shoyu"(Chromaticity: Standard color No. 26, Absorbance E: 1.67 at 530 mm, Salt content: 16.8 g/dl, Aggregate quantity of nitrogen: 1.86 g/dl) was passed through the active carbon in the glass column at the flow rate of 500 ml/hr, and 3,000 ml of colorless filtrate (Chromaticity: No applicable standard color No. due to being colorless, Absorbance E: 0.012 at 530 mm) was obtained.

The filtrate was processed by the following methods to obtain the shoyu with various colors.

0.025% of new coccin was added to 100 ml of the filtrate to obtain a red-colored shoyu.

Similarly, 0.005% of new coccin and 0.025% of tartrazine were added to obtain an orange-colored shoyu.

Similarly, 0.025% of tartrazine was added to the filtrate to obtain an yellow-colored shoyu.

Similarly, 0.01% of brilliant blue FCF was added to the filtrate to obtain a blue-colored shoyu.

Similarly, 0.0006% of brilliant blue FCF and 0.009% of new coccine were added to obtain a purple-colored shoyu.

All these improved types of shoyu present transparent and bright colors, and no fading was observed as in the cases of Example 1.

**Claims**

1. An improved shoyu characterized by its capability to take any of the desired colors such as red, blue, yellow, green, etc. by coloring with natural or synthetic coloring agents after decoloring the original color peculiar to the conventional shoyu, a kind of the liquid seasoning, manufactured mainly from the soybeans and wheat fermented by koji mold.

2. An improved shoyu according to claim 1, wherein said shoyu is a koikuchi shoyu.

3. An improved shoyu according to claim 1, where in said shoyu is a kiage shoyu.

4. An improved shoyu according to claim 1, wherein said shoyu is an usukuchi shoyu.

5. An improved shoyu according to claim 1, wherein said shoyu is a saishikomi shoyu.

6. An improved shoyu according to claim 1, wherein said shoyu is a tamari shoyu.

7. A manufacturing process of the improved shoyu characterized by comprising the process for decolorizing the colors peculiar to the various types of shoyu such as the koikuchi shoyu, kiage shoyu, saishikomi shoyu, tamari shoyu and usukuchi shoyu so that these types of shoyu can readily be colored,and the process for coloring the decolorized shoyu in any desired colors such as red, blue, yellow, green, etc. with natural or synthetic coloring agents.

8. A manufacturing process of the improved shoyu according to claim 7, wherein said shoyu is decolorized with an active carbon.

9. A manufacturing process of the improved shoyu according to claim 7, wherein said shoyu is decolorized by a ultrafiltration method.

10. A manufacturing method of the improved shoyu according to claim 7, wherein said shoyu is decolorized by a reverse osmosis membrane method.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 9, no. 192 (C-296)[1915], 28th August 1985; & JP-A-60 62 958 (AJINOMOTO K.K.) 11-04-1985 * Abstract * | 1-7,9 | A 23 L 1/238<br>A 23 L 1/27 |
| A | CHEMICAL ABSTRACTS, vol. 79, no. 7, 20th August 1973, page 246, abstract no. 41039u, Columbus, Ohio, US; H. HASHIBA: "Nonenzymic browning of soy sauce decolorized by ultrafiltration", & NIPPON NOGEI KAGAKU KAISHI 1973, 47(4), 289-91 | 1-7,9 | |
| A | CHEMICAL ABSTRACTS, vol. 82, no. 21, 26th May 1975, page 467, abstract no. 138018m, Columbus, Ohio, US; & JP-A-74 40 958 (HIGASHIMARU SHOYU CO. LTD) 06-11-1974 | 1-7 | |
| A | GB-A-1 281 784 (KIKKOMAN SHOYU) * Claims 1,16; example 15 * | 1-7 | TECHNICAL FIELDS SEARCHED (Int. Cl.5) |
| A | US-A-3 885 048 (LIGGETT) * Claims 1,4 * | 1-7 | A 23 L |

The present search report has been drawn up for all claims

| Place of search | Date of completion of the search | Examiner |
|---|---|---|
| THE HAGUE | 02-05-1990 | VAN MOER A.M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)